# EUROPEAN PATENT APPLICATION

(11) **EP 4 835 415 A1**
(43) Date of publication of application: **04.11.2026**
(21) Application number: 25192027.8
(22) Date of filing: 28.07.2025
(51) Int. Cl.: G01J 1/02, G01J 1/42

(54) **ULTRAVIOLET ENERGY DETECTION STRUCTURE AND PREPARATION METHOD THEREFOR**

(30) Priority: 28.04.2025 CN 202510544855
(71) Applicant: Guangzhou Supu Software Technology Co., Ltd., Guangzhou, Guangdong 510000 (CN)
(72) Inventor: LIN, Chuangye, GUANGZHOU, GUANGDONG 510000 (CN)
(74) Representative: Araujo, Daniel

(57) **Abstract**

An ultraviolet energy detection structure and a preparation method therefor are disclosed. The ultraviolet energy detection structure includes a base, an ultraviolet energy detection module, and a cover plate; the base is provided with a cooling structure for cooling the base; the cover plate is arranged on the base, a first accommodating cavity and a second accommodating cavity are defined between the cover plate and the base, the first accommodating cavity is configured for accommodating the ultraviolet lamp panel, the cover plate is provided with a light outlet in communication with the first accommodating cavity, the light outlet is configured for receiving ultraviolet light emitted by the ultraviolet lamp panel, the light outlet is provided with a light inlet through-hole in communication with the second accommodating cavity in a side wall of the light outlet; and the ultraviolet energy detection module includes a circuit board and an ultraviolet sensor connected to the circuit board, the circuit board is fixed on the base, the ultraviolet sensor is located in the second accommodating cavity, and a sensing end of the ultraviolet sensor faces the light inlet through-hole. According to the present disclosure, the accuracy of detected ultraviolet energy values can be improved.

## Description

### TECHNICAL FIELD

The present disclosure relates to but is not limited to the technical field of ultraviolet curing, and in particular, to an ultraviolet energy detection structure and a preparation method therefor.

### BACKGROUND

In the related technologies, to reduce the measurement error of an ultraviolet sensor when detecting the ultraviolet energy of an ultraviolet lamp box, a lens needs to be installed. This enables the ultraviolet light emitted from an ultraviolet lamp panel to be transmitted through the lens to the UV sensor, which then detects the energy of the ultraviolet light. However, under long-term ultraviolet irradiation and high-temperature environments, the transmittance of the lens typically decreases, resulting in significant deviation in the value detected by the ultraviolet sensor. This leads to a low accuracy in ultraviolet energy detection.

### SUMMARY

The following is a summary of the subject matter described in detail herein. This summary is not intended to limit the scope of the claims.

In accordance with an embodiment of the present disclosure, provided are an ultraviolet energy detection structure and a preparation method therefor, which can improve the accuracy of detected ultraviolet energy values.

In accordance with an embodiment of the present disclosure, in a first aspect, provided is an ultraviolet energy detection structure, which includes a base, an ultraviolet energy detection module, and a cover plate; the base is provided with a cooling structure for cooling the base; the cover plate is arranged on the base, a first accommodating cavity and a second accommodating cavity are defined between the cover plate and the base, the first accommodating cavity is configured for accommodating an ultraviolet lamp panel, and the cover plate is provided with a light outlet in communication with the first accommodating cavity, the light outlet is configured for receiving ultraviolet light emitted by the ultraviolet lamp panel, and the light outlet is provided with a light inlet through-hole in communication with the second accommodating cavity in a side wall of the light outlet; and the ultraviolet energy detection module includes a circuit board and an ultraviolet sensor connected to the circuit board, the circuit board is fixed on the base, the ultraviolet sensor is located in the second accommodating cavity, a sensing end of the ultraviolet sensor faces the light inlet through-hole, and the ultraviolet sensor is configured for detecting an ultraviolet energy value of the ultraviolet lamp panel.

In some embodiments, an axis of the light inlet through-hole is perpendicular to the plane at which the side wall of the light outlet is located, a center of the sensing end of the ultraviolet sensor is on the same line as the axis of the light inlet through-hole, and the sensing end of the ultraviolet sensor is perpendicular to the axis of the light inlet through-hole.

In some embodiments, the ultraviolet lamp panel includes a plurality of ultraviolet lamps, and a light entrance of the light inlet through-hole is located within an irradiation range of each of the ultraviolet lamps.

In some embodiments, the base is provided with a recess in communication with the second accommodating cavity, and the circuit board is fixedly connected to the recess.

In some embodiments, the base is provided with a first wiring hole and a second wiring hole, the first wiring hole is in communication with the second accommodating cavity at one end of the first wiring hole, another end of the first wiring hole extends through the base, the second wiring hole is in communication with the second accommodating cavity at one end of the second wiring hole, and the second wiring hole is in communication with the first accommodating cavity at another end of the second wiring hole.

In accordance with an embodiment of the present disclosure, in a second aspect, provided is an ultraviolet lamp box, which includes a base, an ultraviolet energy detection module, a cover plate, an ultraviolet lamp panel, and a lamp panel driver; the base is provided with a cooling structure for cooling the base; the ultraviolet lamp panel is arranged on the base; the lamp panel driver is configured for driving the ultraviolet lamp panel; the cover plate is arranged on the base, a first accommodating cavity and a second accommodating cavity are defined between the cover plate and the base, the first accommodating cavity is configured for accommodating the ultraviolet lamp panel, the cover plate is provided with a light outlet in communication with the first accommodating cavity, the light outlet is provided with a light inlet through-hole in communication with the second accommodating cavity in a side wall of the light outlet, and the light outlet is configured for receiving ultraviolet light emitted by the ultraviolet lamp panel; and the ultraviolet energy detection module includes a circuit board and an ultraviolet sensor connected to the circuit board, the circuit board is fixed on the base, the ultraviolet sensor is located in the second accommodating cavity, a sensing end of the ultraviolet sensor faces the light inlet through-hole, and the ultraviolet sensor is configured for detecting an ultraviolet energy value of the ultraviolet lamp panel.

In some embodiments, a plurality of ultraviolet lamp panels are provided, the ultraviolet lamp panel is provided in plural, the plurality of ultraviolet lamp panels are arranged side by side on the base, quantities of the lamp panel driver, the light outlet, the light inlet through-hole, and the ultraviolet energy detection module each correspond to a quantity of the ultraviolet lamp panels, each of the ultraviolet lamp panels is connected to a corresponding lamp panel driver, each of the lamp panel drivers is configured for driving a corresponding ultraviolet lamp panel, ultraviolet light emitted by each of the ultraviolet lamp panels is received by a corresponding light outlet, each of the light inlet through-holes is provided in the side wall of a corresponding light outlet, the sensing end of each of the ultraviolet sensors faces a corresponding light inlet through-hole, and each of the ultraviolet sensors is configured for detecting the ultraviolet energy value of a corresponding ultraviolet lamp panel.

In accordance with an embodiment of the present disclosure, in a third aspect, provided is a method for preparing an ultraviolet energy detection structure, which includes: preparing a plurality of candidate energy detection structures, wherein each of the candidate energy detection structures comprises an ultraviolet energy detection module and a cover plate, candidate diameters or candidate depths of light inlet through-holes of any two of the cover plates are different, and each of the candidate energy detection structures is provided with an ultraviolet lamp panel; in each of the candidate energy detection structures, performing energy detection by the ultraviolet energy detection module in the respective candidate energy detection structure to obtain a first voltage variation curve, performing energy detection by an ultraviolet energy detector located external to the respective candidate energy detection structure to obtain a second voltage variation curve, and determining a range coverage based on the first voltage variation curve and the corresponding second voltage variation curve, wherein a working current of the ultraviolet lamp panel gradually increases during energy detection; constructing a first fitted model based on the range coverages, the corresponding candidate diameters, and the corresponding candidate depths, and with an objective of maximizing range coverage, determining a target diameter and a target depth based on the first fitted model; and preparing a target ultraviolet energy detection structure based on the target diameter and the target depth, wherein the target ultraviolet energy detection structure is the ultraviolet energy detection structure described above. In some embodiments, the target ultraviolet energy detection structure is provided with a cooling structure for connecting a water cooling module, wherein the cooling structure is located at the base of the target ultraviolet energy detection structure, and after the preparing the target ultraviolet energy detection structure based on the target diameter and the target depth, the method further includes: setting a cooling temperature of the water cooling module to a plurality of candidate temperatures, respectively; at each of the candidate temperatures, performing energy detection by the ultraviolet energy detection module in the target ultraviolet energy detection structure to obtain a third voltage variation curve, performing energy detection by the ultraviolet energy detector located external to the target ultraviolet energy detection structure to obtain a fourth voltage variation curve, and determining a degree of curve coincidence between the third voltage variation curve and the fourth voltage variation curve, wherein the working current of the ultraviolet lamp panel gradually increases during energy detection; and constructing a second fitted model based on the candidate temperatures and the corresponding degrees of curve coincidence; with an objective of maximizing degree of curve coincidence, determining a target temperature based on the second fitted model; and setting the cooling temperature of the water cooling module to the target temperature.

In some embodiments, after the setting the cooling temperature of the water cooling module to the target temperature, the method further includes: at the target temperature, performing energy detection by the ultraviolet energy detection module in the target ultraviolet energy detection structure to obtain a fifth voltage variation curve, and performing energy detection by the ultraviolet energy detector located external to the target ultraviolet energy detection structure to obtain a sixth voltage variation curve, wherein the working current of the ultraviolet lamp panel gradually increases during energy detection; and acquiring a reference energy mapping function of the ultraviolet energy detector, and adjusting the reference energy mapping function based on a mapping relationship between the fifth voltage variation curve and the sixth voltage variation curve to obtain a target energy mapping function of the ultraviolet energy detection module, wherein the reference energy mapping function is configured for indicating a relationship between a detection voltage of the ultraviolet energy detector and an ultraviolet energy value, and the target energy mapping function is configured for indicating a relationship between a detection voltage of the ultraviolet energy detection module and an ultraviolet energy value.

The embodiments of the present disclosure include at least the following beneficial effects. The base is provided with a cooling structure for cooling the base, which can prevent the base from overheating and improve the working stability. Further, the cover plate is arranged on the base, a first accommodating cavity and a second accommodating cavity are defined between the cover plate and the base, the first accommodating cavity is configured for accommodating the ultraviolet lamp panel. Moreover, the ultraviolet energy detection module includes a circuit board and an ultraviolet sensor connected to the circuit board. The circuit board is fixed on the base, and the ultraviolet sensor is located in the second accommodating cavity. The cover plate is provided with a light outlet in communication with the first accommodating cavity, the light outlet is provided with a light inlet through-hole in communication with the second accommodating cavity in a side wall of the light outlet, and the sensing end of the ultraviolet sensor in the second accommodating cavity faces the light inlet through-hole. Therefore, after the light outlet receives the ultraviolet light emitted by the ultraviolet lamp panel, the light inlet through-hole can collect the ultraviolet light at the light outlet, and then the ultraviolet sensor can detect the ultraviolet light passing through the light inlet through-hole. Further, since the light inlet through-hole can control the light intake for the ultraviolet sensor, the ultraviolet sensor can always work in a linear amplification area by designing the light inlet through-hole with an appropriate diameter, shape and depth, and the accuracy of detected ultraviolet energy values can be improved. Additionally, a low light intake can prevent the ultraviolet sensor from overheating, thereby preventing high-temperature damage to the ultraviolet sensor.

### BRIEF DESCRIPTION OF DRAWINGS

The accompanying drawings are used to provide further understanding of the technical solutions of the present disclosure and constitute a part of the description. These drawings, together with the embodiments of the present disclosure, are used to explain the technical solutions of the present disclosure and do not constitute a limitation on the technical solutions of the present disclosure.
FIG. 1 is an optional cross-sectional view of an ultraviolet energy detection structure provided in an embodiment of the present disclosure;
FIG. 2 is a partial enlarged view of position A in FIG. 1;
FIG. 3 is an optional cross-sectional view of some components of an ultraviolet energy detection structure provided in an embodiment of the present disclosure;
FIG. 4 is an optional bottom view of an ultraviolet lamp box provided in an embodiment of the present disclosure;
FIG. 5 is an optional top view of an ultraviolet lamp box provided in an embodiment of the present disclosure;
FIG. 6 is an optional structural schematic diagram of an ultraviolet lamp box provided in an embodiment of the present disclosure without a lampshade;
FIG. 7 is an optional structural schematic diagram of a base provided in an embodiment of the present disclosure;
FIG. 8 is an optional structural schematic diagram of a base and an ultraviolet energy detection module provided in an embodiment of the present disclosure;
FIG. 9 is an optional schematic flowchart of an ultraviolet energy control method provided in an embodiment of the present disclosure;
FIG. 10 is an optional schematic flowchart of a method for preparing an ultraviolet energy detection structure provided in an embodiment of the present disclosure;
FIG. 11 is an optional schematic flowchart of a temperature control method provided in an embodiment of the present disclosure;
FIG. 12 is an optional schematic flowchart of a calibration method provided in an embodiment of the present disclosure; and
FIG. 13 is an optional schematic diagram of a hardware structure of an electronic device provided in an embodiment of the present disclosure.

### DETAILED DESCRIPTION

To make the objectives, technical solutions and advantages of the present disclosure clearer, the present disclosure will be further described in detail below in conjunction with the accompanying drawings and embodiments. It should be appreciated that the embodiments described herein are merely illustrative of the present disclosure and are not intended to limit the present disclosure. It should be noted that in each embodiment of the present disclosure, when it is necessary to process data related to the characteristics of the target object based on the attribute information or a collection of attribute information of the target object, the consent or permission of the target object will be obtained first. Moreover, the collection, use and processing of such data must comply with relevant laws, regulations and standards. The target object may be a user. In addition, when it is necessary for the embodiments of the present disclosure to acquire target object attribute information, separate permission or consent from the target object will be obtained through methods such as pop-up windows or redirecting to a confirmation page. Only after obtaining the explicit separate permission or consent from the target object, will the necessary data related to the target object be collected to ensure the normal operation of the embodiments of the present disclosure.

In the description of the present disclosure, the term "several" refers to one or more; the term "a plurality of" refers to two or more; and terms such as "greater than", "less than" and "exceeding" are interpreted as excluding the specified number while terms such as "above", "below" and "within" are interpreted as including the specified number.

It should be noted that although functional modules are divided in the device diagrams, and logical orders are shown in the flowcharts, in some cases, the device may be divided in a different manner, or the steps shown or described may be executed in an order different from that shown in the flowcharts. Terms such as "first" and "second" in the description, claims or the accompanying drawings are used to distinguish between similar objects and are not necessarily used to describe a specific order or sequence.

In the related technologies, to reduce the measurement error of an ultraviolet sensor when detecting the ultraviolet energy of an ultraviolet lamp box, a lens needs to be installed. This enables the ultraviolet light emitted from an ultraviolet lamp panel to be transmitted through the lens to the ultraviolet sensor, which then detects the energy of the ultraviolet light. However, under long-term ultraviolet irradiation and high-temperature environments, the transmittance of the lens typically decreases, resulting in significant deviation in the value detected by the ultraviolet sensor. This leads to a low accuracy in ultraviolet energy detection.

In view of the significant deviation in the detected value, the present disclosure provides an ultraviolet energy detection structure and a preparation method therefor, the method including: an ultraviolet energy detection structure, the ultraviolet energy detection structure including a base, an ultraviolet energy detection module, and a cover plate. The base is provided with a cooling structure for cooling the base. The cover plate is arranged on the base, a first accommodating cavity and a second accommodating cavity are defined between the cover plate and the base, the first accommodating cavity is configured for accommodating an ultraviolet lamp panel. The cover plate is provided with a light outlet in communication with the first accommodating cavity. The light outlet is configured for receiving ultraviolet light emitted by the ultraviolet lamp panel. The light outlet is provided with a light inlet through-hole in communication with the second accommodating cavity in a side wall of the light outlet. The ultraviolet energy detection module includes a circuit board and an ultraviolet sensor connected to the circuit board, the circuit board is fixed on the base, the ultraviolet sensor is located in the second accommodating cavity. A sensing end of the ultraviolet sensor faces the light inlet through-hole, and the ultraviolet sensor is configured for detecting an ultraviolet energy value of the ultraviolet lamp panel. According to the solution provided in the embodiments of the present disclosure, the base is provided with a cooling structure for cooling the base, which can prevent the base from overheating and improve the working stability.

Further, the cover plate is arranged on the base, a first accommodating cavity and a second accommodating cavity are defined between the cover plate and the base, the first accommodating cavity is configured for accommodating an ultraviolet lamp panel. Moreover, the ultraviolet energy detection module includes a circuit board and an ultraviolet sensor connected to the circuit board. The circuit board is fixed on the base, and the ultraviolet sensor is located in the second accommodating cavity. The cover plate is provided with a light outlet in communication with the first accommodating cavity, the light outlet is provided with a light inlet through-hole in communication with the second accommodating cavity in a side wall of the light outlet, and the sensing end of the ultraviolet sensor in the second accommodating cavity faces the light inlet through-hole. Therefore, after the light outlet receives the ultraviolet light emitted by the ultraviolet lamp panel, the light inlet through-hole can collect the ultraviolet light at the light outlet, and then the ultraviolet sensor can detect the ultraviolet light passing through the light inlet through-hole. Further, since the light inlet through-hole can control the light intake for the ultraviolet sensor, the ultraviolet sensor can always work in a linear amplification area by designing the light inlet through-hole with an appropriate diameter, shape and depth, and the accuracy of detected ultraviolet energy values can be improved. Additionally, a low light intake can prevent the ultraviolet sensor from overheating, thereby preventing high-temperature damage to the ultraviolet sensor.

The ultraviolet energy detection structure and the preparation method therefor provided in the embodiments of the present disclosure will be specifically described through the following implementations. First, the ultraviolet energy detection structure in the embodiments of the present disclosure will be described.

The embodiments of the present disclosure will be further described below in conjunction with the accompanying drawings.

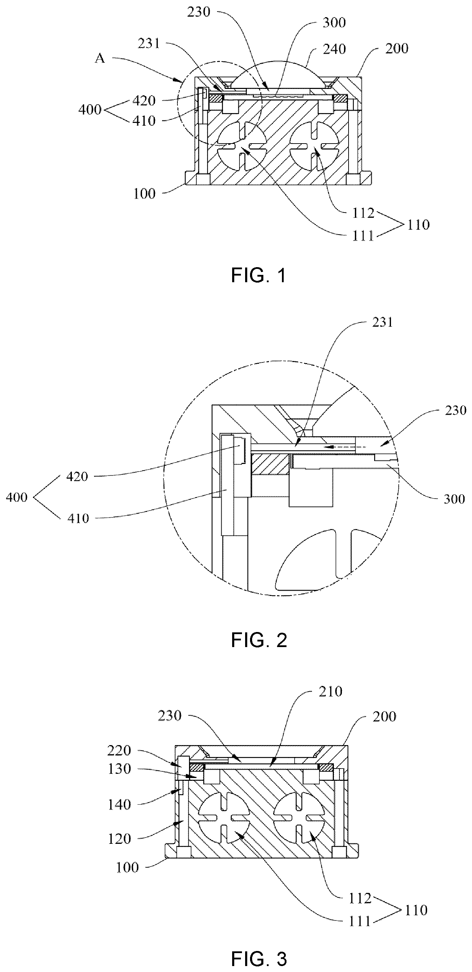

Referring to FIG. 1 to FIG. 3, FIG. 1 is an optional cross-sectional view of an ultraviolet energy detection structure provided in an embodiment of the present disclosure, FIG. 2 is a partial enlarged view of position A in FIG. 1, and FIG. 3 is an optional cross-sectional view of some components of an ultraviolet energy detection structure provided in an embodiment of the present disclosure. An embodiment of the present disclosure provides an ultraviolet energy detection structure, which includes a base 100, an ultraviolet energy detection module 400, and a cover plate 200.

The base 100 is provided with a cooling structure 110 for cooling the base 100.

The cover plate 200 is arranged on the base 100. A first accommodating cavity 210 and a second accommodating cavity 220 are defined between the cover plate 200 and the base 100. The first accommodating cavity 210 is configured for accommodating the ultraviolet lamp panel 300. The cover plate 200 is provided with a light outlet 230 in communication with the first accommodating cavity 210. The light outlet 230 is configured for receiving ultraviolet light emitted by the ultraviolet lamp panel 300. The light outlet 230 is provided with a light inlet through-hole 231 in communication with the second accommodating cavity 220 in a side wall of the light outlet 230.

The ultraviolet energy detection module 400 includes a circuit board 410 and an ultraviolet sensor 420 connected to the circuit board 410. The circuit board 410 is fixed on the base 100. The ultraviolet sensor 420 is located in the second accommodating cavity 220. A sensing end of the ultraviolet sensor 420 faces the light inlet through-hole 231. The ultraviolet sensor 420 is configured for detecting an ultraviolet energy value of the ultraviolet lamp panel 300.

It should be noted that the cooling structure 110 includes a first cooling channel 111 and a second cooling channel 112, which are arranged side by side inside the base 100, and the first cooling channel 111 and the second cooling channel 112 can both be filled with coolant to achieve a cooling effect.

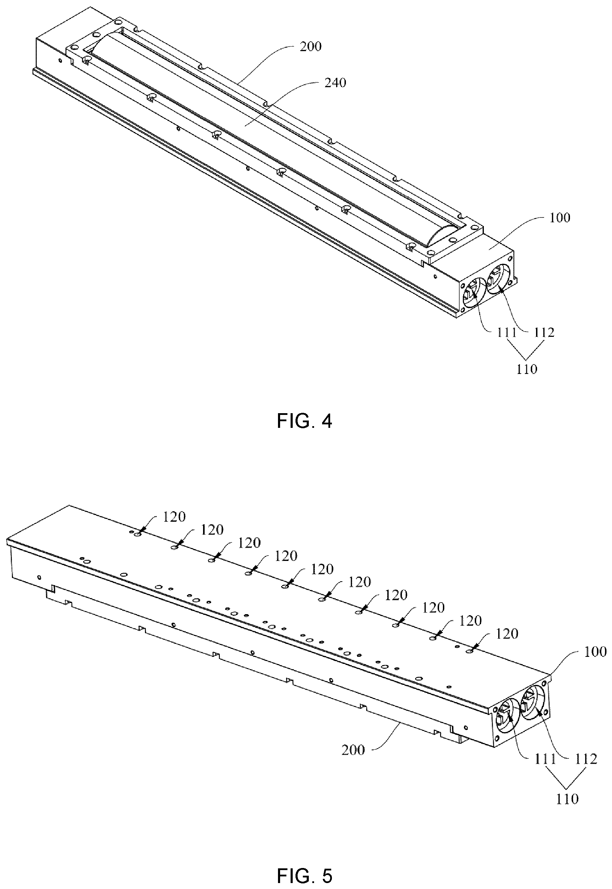

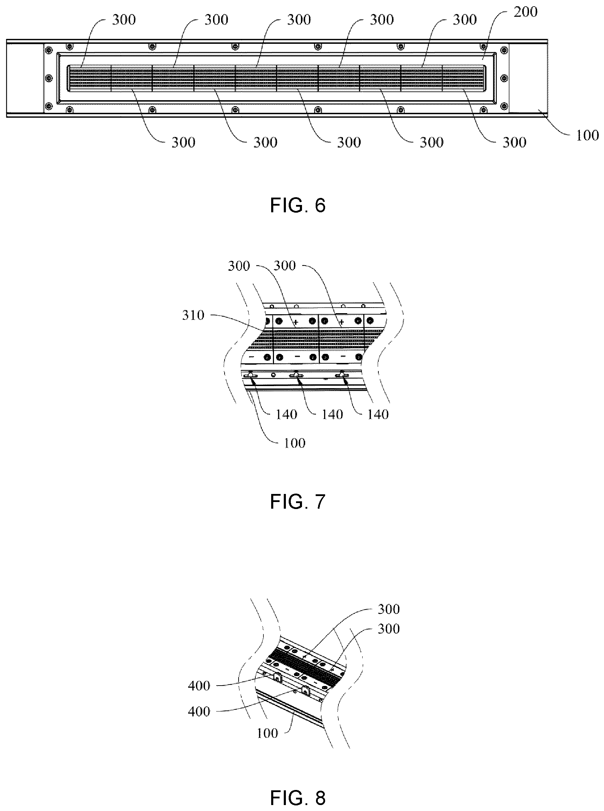

Notably, the ultraviolet energy detection structure is a part of an ultraviolet lamp box. For example, referring to FIG. 4 to FIG. 8, FIG. 4 is an optional bottom view of an ultraviolet lamp box provided in an embodiment of the present disclosure, FIG. 5 is an optional top view of an ultraviolet lamp box provided in an embodiment of the present disclosure, FIG. 6 is an optional structural schematic diagram of an ultraviolet lamp box provided in an embodiment of the present disclosure without a lampshade, FIG. 7 is an optional structural schematic diagram of a base provided in an embodiment of the present disclosure, and FIG. 8 is an optional structural schematic diagram of a base and an ultraviolet energy detection module provided in an embodiment of the present disclosure.

The cover plate 200 and the base 100 are both elongated. The cover plate 200 is provided with a lampshade 240 on the light outlet 230, and ultraviolet light can irradiate through the lampshade 240. A plurality of ultraviolet lamp panels 300 are provided, and the plurality of ultraviolet lamp panels 300 are arranged side by side on the base. Each ultraviolet lamp panel 300 is connected to an independent constant current source (not shown in the figures), which can supply independent current to each ultraviolet lamp panel 300, so as to improve the control of the ultraviolet lamp panel 300 and increase the service life of the ultraviolet lamp panel 300.

When a plurality of ultraviolet lamp panels 300 are provided, the cover plate 200 will be provided with light inlet through-holes 231 corresponding to the respective ultraviolet lamp panels 300, and the base 100 will be fixedly connected to ultraviolet energy detection modules 400 corresponding to the respective ultraviolet lamp panels 300. Ultraviolet light emitted by the ultraviolet lamp panels 300 can enter the corresponding light inlet through-holes 231 and be received by the corresponding ultraviolet energy detection modules 400, ensuring that the ultraviolet energy detection modules 400 can effectively detect the ultraviolet energy values of the corresponding ultraviolet lamp panels 300.

The circuit board 410 may include a ceramic substrate having a small thickness and good thermal conductivity. The circuit board 410 is in direct contact with the base 100, which can improve the heat dissipation. Specifically, the thickness may be 0.2 mm. The circuit board 410 having a thickness of 0.2 mm has good thermal conductivity and robustness.

The ultraviolet sensor 420 may be manufactured based on an indium gallium nitride (InGaN) diode, which has the advantages of high responsiveness and low dark current when measuring variations in ultraviolet energy attenuation.

When the light inlet through-hole 231 has a diameter in the range of 2 mm to 3 mm, the energy attenuation for the ultraviolet light is conducive to the detection by the ultraviolet sensor 420.

It should be noted that due to high energy of the ultraviolet light emitted by the ultraviolet lamp panel, direct frontal irradiation on the ultraviolet sensor 420 is likely to cause saturation of the ultraviolet sensor 420 or high-temperature burnout. The light intake can be adjusted by changing the diameter, shape, depth, and the like of the light inlet through-hole 231, such that the ultraviolet sensor 420 always works in a linear amplification area, which can improve the detection accuracy of the ultraviolet sensor 420 and avoid high-temperature damage to the chip of the ultraviolet sensor 420.

The light inlet through-hole 231 is located on the side of the ultraviolet lamp panel 300, such that the energy of the ultraviolet light entering the light inlet through-hole 231 is not disturbed by external ambient light, reflected light or installation angle deviation, which greatly improves the detection accuracy and stability.

It should be noted that the ink in the printing materials contains photosensitive materials, which will undergo a polymerization reaction when exposed to ultraviolet light, such that the liquid ink is cured into an insoluble solid coating film.

On this basis, the base 100 is provided with a cooling structure 110 for cooling the base 100, which can prevent the base 100 from overheating and improve the working stability. Further, the cover plate 200 is arranged on the base 100. A first accommodating cavity 210 and a second accommodating cavity 220 are defined between the cover plate 200 and the base 100. The first accommodating cavity 210 is configured for accommodating the ultraviolet lamp panel 300. Moreover, the ultraviolet energy detection module 400 includes a circuit board 410 and an ultraviolet sensor 420 connected to the circuit board 410. The circuit board 410 is fixed on the base 100, and the ultraviolet sensor 420 is located in the second accommodating cavity 220. The cover plate 200 is provided with a light outlet 230 in communication with the first accommodating cavity 210, the light outlet 230 is provided with a light inlet through-hole 231 in communication with the second accommodating cavity 220 in a side wall of the light outlet 230, and the sensing end of the ultraviolet sensor 420 located in the second accommodating cavity 220 faces the light inlet through-hole 231. Therefore, after the light outlet 230 receives the ultraviolet light emitted by the ultraviolet lamp panel 300, the light inlet through-hole 231 can collect the ultraviolet light at the light outlet 230, and then the ultraviolet sensor 420 can detect the ultraviolet light passing through the light inlet through-hole 231. In addition, since the light inlet through-hole 231 can control the light intake for the ultraviolet sensor 420, designing the light inlet through-hole 231 with an appropriate diameter, shape and depth can ensure that the ultraviolet sensor 420 always works in a linear amplification area, and the accuracy of the detected ultraviolet energy values can be improved. Further, a low light intake can prevent the ultraviolet sensor 420 from overheating, thereby preventing high-temperature damage to the ultraviolet sensor 420.

It should be appreciated that when the light inlet through-hole 231 is not properly designed, for example, when the light inlet through-hole 231 is oversized, the light intake for the ultraviolet sensor 420 will be excessive, leading to overheating of the ultraviolet sensor 420. For another example, when the light inlet through-hole 231 is undersized, the light intake for the ultraviolet sensor 420 will be inadequate, which will affect detection results of the ultraviolet sensor 420 and even make it impossible to detect ultraviolet energy values. Therefore, a properly-sized light inlet through-hole 231 can be designed by the following preparation method to ensure that the ultraviolet sensor 420 always works in a linear amplification area, thereby improving the accuracy of the detected ultraviolet energy values.

Referring again to FIG. 1 to FIG. 3, in some embodiments, an axis of the light inlet through-hole 231 is perpendicular to the plane at which the side wall of the light outlet 230 is located, the center of the sensing end of the ultraviolet sensor 420 is on the same line as the axis of the light inlet through-hole 231, and the sensing end of the ultraviolet sensor 420 is perpendicular to the axis of the light inlet through-hole 231.

The plane at which the ultraviolet lamp panel 300 is located is perpendicular to the plane at which the side wall of the light outlet 230 is located, the light-emitting surface of the ultraviolet lamp panel 300 faces the light outlet 230, and the axis of the light inlet through-hole 231 is horizontal. On this basis, since the axis of the light inlet through-hole 231 is perpendicular to the plane at which the side wall of the light outlet 230 is located, part of the ultraviolet light passing through the light outlet 230 can enter the light inlet through-hole 231. Further, the center of the sensing end of the ultraviolet sensor 420 is on the same line as the axis of the light inlet through-hole 231, and the sensing end of the ultraviolet sensor 420 is perpendicular to the axis of the light inlet through-hole 231, that is, the sensing end of the ultraviolet sensor 420 faces the light inlet through-hole 231. Therefore, the sensing end of the ultraviolet sensor 420 can effectively receive the ultraviolet light passing through the light inlet through-hole 231, ensuring that the ultraviolet sensor 420 can accurately detect the ultraviolet energy value of the ultraviolet lamp panel 300 through the received ultraviolet light.

Referring again to FIG. 1 to FIG. 7, in some embodiments, the ultraviolet lamp panel 300 includes a plurality of ultraviolet lamps 310, and the light entrance of the light inlet through-hole 231 is located within an irradiation range of each ultraviolet lamp 310.

It should be noted that the irradiation range of the ultraviolet lamp 310 can be specifically described by the beam angle. For example, the irradiation direction of the ultraviolet lamp 310 is perpendicular to the ultraviolet lamp panel 300 and toward the light outlet 230. For example, the ultraviolet lamp 310 can have a beam angle of 135 degrees, providing a wide irradiation range, such that the ultraviolet light emitted by the plurality of ultraviolet lamps 310 can enter the light inlet through-hole 231.

The width of the ultraviolet lamp panel needs to be set according to the width of a printing material. On this basis, the ultraviolet lamp panel 300 includes a plurality of ultraviolet lamps 310, and the light entrance of the light inlet through-hole 231 is located within the irradiation range of each ultraviolet lamp 310, such that the ultraviolet light emitted by the plurality of ultraviolet lamps 310 can enter the light inlet through-hole 231, preventing the ultraviolet energy detection module 400 from being unable to accurately detect the ultraviolet energy of the entire ultraviolet lamp panel 300, thereby improving the accuracy of ultraviolet energy detection.

Referring again to FIG. 1 to FIG. 3 and referring to FIG. 7, in some embodiments, the base 100 is provided with a recess 140 in communication with the second accommodating cavity 220, and the circuit board 410 is fixedly connected to the recess 140.

On this basis, the base 100 is provided with a recess 140 in communication with the second accommodating cavity 220, and the circuit board 410 is fixedly connected to the recess 140, such that the circuit board 410 is not easily displaced, preventing the sensing end of the ultraviolet sensor 420 from being unable to align with the light inlet through-hole 231, thereby improving the stability of the ultraviolet detection module.

Referring again to FIG. 1 to FIG. 5, in some embodiments, the base 100 is provided with a first wiring hole 120 and a second wiring hole 130. The first wiring hole 120 is in communication with the second accommodating cavity 220 at one end thereof, and the other end of the first wiring hole 120 extends through the base 100. The second wiring hole 130 is in communication with the second accommodating cavity 220 at one end thereof, and the second wiring hole 130 is in communication with the first accommodating cavity 210 at the other end thereof.

A wire for connecting the ultraviolet energy detection module 400 can pass through the first wiring hole 120 to connect to the ultraviolet energy detection module 400, and a wire for connecting the ultraviolet lamp panel 300 can sequentially pass through the first wiring hole 120, the second accommodating cavity 220, and the second wiring hole 130 to connect to the ultraviolet lamp panel 300.

On this basis, the base 100 is provided with a first wiring hole 120 and a second wiring hole 130. The first wiring hole 120 is connected to the second accommodating cavity 220 at one end thereof, and the other end of the first wiring hole 120 extends through the base 100. The second wiring hole 130 is connected to the second accommodating cavity 220 at one end thereof, and the second wiring hole 130 is connected to the first accommodating cavity 210 at the other end thereof. This can facilitate the connection of the ultraviolet energy detection module 400 and the ultraviolet lamp panel 300, thereby improving the practicability of the ultraviolet energy detection structure. Referring again to FIG. 1 to FIG. 8, an embodiment of the present disclosure further provides an ultraviolet lamp box, which includes a base 100, an ultraviolet energy detection module 400, a cover plate 200, an ultraviolet lamp panel 300, and a lamp panel driver (not shown in the figures).

The base 100 is provided with a cooling structure 110 for cooling the base 100.

The ultraviolet lamp panel 300 is arranged on the base 100.

The lamp panel driver is configured for driving the ultraviolet lamp panel 300.

The cover plate 200 is arranged on the base 100. A first accommodating cavity 210 and a second accommodating cavity 220 are defined between the cover plate 200 and the base 100.

The first accommodating cavity 210 is configured for accommodating the ultraviolet lamp panel 300. The cover plate 200 is provided with a light outlet 230 in communication with the first accommodating cavity 210. The light outlet 230 is provided with a light inlet through-hole 231 in communication with the second accommodating cavity 220 in a side wall of the light outlet 230. The light outlet 230 is configured for receiving ultraviolet light emitted by the ultraviolet lamp panel 300.

The ultraviolet energy detection module 400 includes a circuit board 410 and an ultraviolet sensor 420 connected to the circuit board 410. The circuit board 410 is fixed on the base 100. The ultraviolet sensor 420 is located in the second accommodating cavity 220. A sensing end of the ultraviolet sensor 420 faces the light inlet through-hole 231. The ultraviolet sensor 420 is configured for detecting an ultraviolet energy value of the ultraviolet lamp panel 300.

The lamp panel driver may be disposed inside the base 100 or outside the base 100, which is not limited in the embodiments of the present disclosure.

It should be noted that by setting varying working currents, the lamp panel driver can drive the ultraviolet lamp panel 300 to emit ultraviolet light of varying intensities.

On this basis, the base 100 is provided with a cooling structure 110 for cooling the base 100, which can prevent the base 100 from overheating and improve the working stability. Further, the cover plate 200 is arranged on the base 100. A first accommodating cavity 210 and a second accommodating cavity 220 are defined between the cover plate 200 and the base 100, and the first accommodating cavity 210 is configured for accommodating the ultraviolet lamp panel 300. The lamp panel driver is configured for driving the ultraviolet lamp panel 300. Moreover, the ultraviolet energy detection module 400 includes a circuit board 410 and an ultraviolet sensor 420 connected to the circuit board 410. The circuit board 410 is fixed on the base 100, and the ultraviolet sensor 420 is located in the second accommodating cavity 220.

The cover plate 200 is provided with a light outlet 230 in communication with the first accommodating cavity 210. The light outlet 230 is provided with a light inlet through-hole 231 in communication with the second accommodating cavity 220 in a side wall of the light outlet 230, and the sensing end of the ultraviolet sensor 420 located in the second accommodating cavity 220 faces the light inlet through-hole 231. Therefore, after the light outlet 230 receives the ultraviolet light emitted by the ultraviolet lamp panel 300, the light inlet through-hole 231 can collect the ultraviolet light at the light outlet 230 and attenuate the ultraviolet light, and then the ultraviolet sensor 420 can detect the ultraviolet light attenuated by the light inlet through-hole 231. In addition, since the light inlet through-hole 231 can control the light intake for the ultraviolet sensor 420, designing the light inlet through-hole 231 with an appropriate diameter, shape and depth can ensure that the ultraviolet sensor 420 always works in a linear amplification area, which can improve the accuracy of the detected ultraviolet energy values. Further, a low light intake can prevent the ultraviolet sensor 420 from overheating, thereby preventing high-temperature damage to the ultraviolet sensor 420.

Referring again to FIG. 1 to FIG. 3, and to FIG. 6 to FIG. 8, in some embodiments, a plurality of ultraviolet lamp panels 300 are provided, and the plurality of ultraviolet lamp panels 300 are arranged side by side on the base 100. The quantities of the lamp panel drivers, the light outlets 230, the light inlet through-holes 231, and the ultraviolet energy detection modules 400 each correspond to the quantity of the ultraviolet lamp panels 300. Each ultraviolet lamp panel 300 is connected to a corresponding lamp panel driver. Each lamp panel driver is configured for driving a corresponding ultraviolet lamp panel 300. Ultraviolet light emitted by each ultraviolet lamp panel 300 is received by a corresponding light outlet 230. Each light inlet through-hole 231 is provided in the side wall of a corresponding light outlet 230. The sensing end of each ultraviolet sensor 420 faces a corresponding light inlet through-hole 231. Each ultraviolet sensor 420 is configured for detecting an ultraviolet energy value of a corresponding ultraviolet lamp panel 300.

It should be noted that since the quantity of the second accommodating cavities 220 corresponds to the quantity of the ultraviolet lamp panels 300, each ultraviolet sensor 420 is not affected by other ultraviolet lamp panels 300, which can improve the accuracy of ultraviolet energy detection. On this basis, since each ultraviolet sensor 420 can detect the ultraviolet energy value of a corresponding ultraviolet lamp panel 300, the working current of a corresponding lamp panel driver can be adjusted according to the ultraviolet energy value of the ultraviolet lamp panel 300, so as to dynamically adjust the intensity of ultraviolet light emitted by the ultraviolet lamp panel 300, thereby improving the curing effect of the ultraviolet lamp box on printing materials through enhanced control.

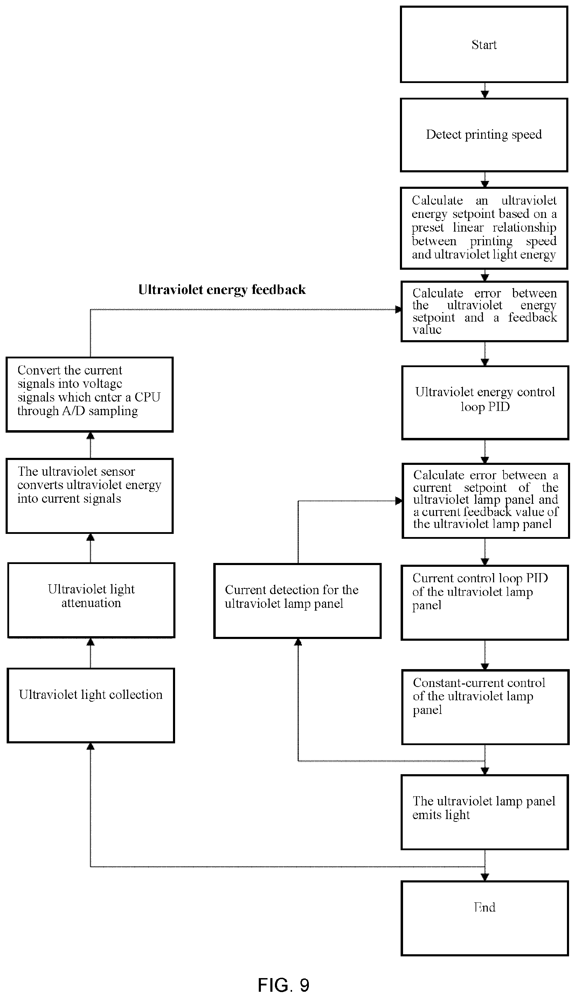

It should be noted that, referring to FIG. 9, FIG. 9 is an optional schematic flowchart of an ultraviolet energy control method provided in an embodiment of the present disclosure. A printing material moves under an ultraviolet lamp box and is cured by exposure to ultraviolet light emitted by the ultraviolet lamp box. The process of adjusting the output ultraviolet energy for the ultraviolet lamp panel 300 is as follows. At the start, the printing speed of the printing material is detected. An ultraviolet energy setpoint is calculated on the basis of a preset linear relationship between the printing speed and the ultraviolet light energy. Then, an outer loop performs ultraviolet energy control, and the error between the ultraviolet energy setpoint and a feedback value is calculated. Next, the process proceeds to an ultraviolet energy control loop PID, and the error between a current setpoint of the ultraviolet lamp panel 300 and a current feedback value of the ultraviolet lamp panel 300 is calculated. Next, the process proceeds to a current control loop PID of the ultraviolet lamp panel 300. An inner loop performs current control for the ultraviolet lamp panel 300, adjusting the current of the ultraviolet lamp panel 300 through constant-current control of the ultraviolet lamp panel 300. Next, the current of the ultraviolet lamp panel 300 is detected to obtain an instant current feedback value of the ultraviolet lamp panel 300 so as to calculate the error between the current setpoint of the ultraviolet lamp panel 300 and the current feedback value of the ultraviolet lamp panel 300.

The process continues until the error between the current setpoint of the ultraviolet lamp panel 300 and the current feedback value of the ultraviolet lamp panel 300 is less than a preset value. The ultraviolet lamp panel 300 then emits ultraviolet light, which passes through the light inlet through-hole 231 for ultraviolet light collection and attenuation. The ultraviolet sensor 420 converts ultraviolet energy into current signals, and the current signals are converted into voltage signals which enter a CPU through A/D sampling. The CPU then determines the ultraviolet energy and obtains an ultraviolet energy feedback value, and then performs ultraviolet energy feedback to recalculate the error between the ultraviolet energy setpoint and the feedback value, until the calculated error between the ultraviolet energy setpoint and the feedback value is less than the preset value. Finally, the process of adjusting the output ultraviolet energy for the ultraviolet lamp panel 300 ends.

PID refers to the control on the basis of proportion (P), integral (I) and differential (D) of deviation in process control.

A/D stands for A/D converter, which refers to an electronic element that converts analog signals into digital signals.

The CPU can calculate the ultraviolet energy by configuring a target energy mapping function in advance.

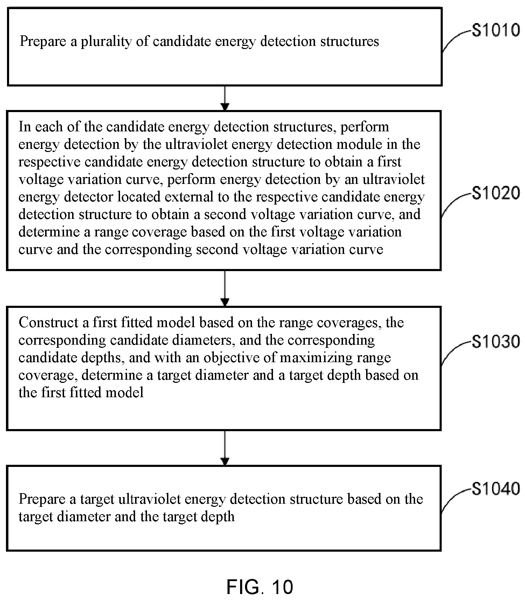

As shown in FIG. 10, FIG. 10 is an optional flowchart of a method for preparing an ultraviolet energy detection structure provided in an embodiment of the present disclosure. The method for preparing an ultraviolet energy detection structure includes but is not limited to the following steps S1010 to S1040.

At step S1010, a plurality of candidate energy detection structures are prepared, wherein each of the candidate energy detection structures includes an ultraviolet energy detection module and a cover plate, the candidate diameters or candidate depths of light inlet through-holes of any two cover plates being different, and each of the candidate energy detection structures is provided with an ultraviolet lamp panel.

At step S1020, in each of the candidate energy detection structures, the ultraviolet energy detection module in the candidate energy detection structure performs energy detection to obtain a first voltage variation curve, an ultraviolet energy detector located external to the candidate energy detection structure performs energy detection to obtain a second voltage variation curve, and a range coverage is determined on the basis of the first voltage variation curve and the corresponding second voltage variation curve, wherein the working current of the ultraviolet lamp panel gradually increases during energy detection.

At step S1030, a first fitted model is constructed on the basis of the range coverages, the corresponding candidate diameters, and the corresponding candidate depths, and with an objective of maximizing range coverage, a target diameter and a target depth is determined on the basis of the first fitted model.

At step S1040, a target ultraviolet energy detection structure is prepared on the basis of the target diameter and the target depth, wherein the target ultraviolet energy detection structure is the ultraviolet energy detection structure described above.

Specifically, a plurality of candidate energy detection structures can be prepared in multiple ways. For example, a plurality of cover plates with varying candidate diameters or candidate depths can be prepared, and then each cover plate is sequentially installed on the same base fixedly connected to an ultraviolet energy detection module. Each time a cover plate is installed, a candidate energy detection structure is obtained, and then energy detection is performed on the basis of the current candidate energy detection structure. After the energy detection for a current candidate energy detection structure is completed, the current cover plate is removed and a next cover plate is installed to obtain a next candidate energy detection structure, and then energy detection is performed on the basis of said next candidate energy detection structure until all cover plates are installed and energy detection is completed. For another example, a plurality of cover plates with varying candidate diameters or candidate depths may be prepared, and then the cover plates may be respectively installed on different bases each having an ultraviolet energy detection module fixed thereon, thereby obtaining a plurality of candidate energy detection structures.

The first voltage variation curve and the second voltage variation curve may both be constructed in a coordinate system where the horizontal axis represents working current and the vertical axis represents detection voltage.

Specifically, the first fitted model can be constructed using methods such as polynomial regression, interpolation and machine learning models, and the objective of maximizing range coverage means the optimization objective of the first fitted model is maximizing range coverage. The optimization of the first fitted model can be achieved using methods such as numerical optimization, interpolation search or function inversion.

On this basis, each candidate energy detection structure includes an ultraviolet energy detection module and a cover plate, and since the candidate diameters or candidate depths of light inlet through-holes of any two cover plates are different, the light inlet through-holes of different cover plates usually have varying degrees of attenuation on ultraviolet light, resulting in generally different amounts of light intake for the ultraviolet energy detection modules in the candidate energy detection structures. Therefore, the ultraviolet energy detection modules in the candidate energy detection structures usually have varying measurement ranges. Since the ultraviolet energy detector is a high-precision detection instrument, the measurement range of the ultraviolet energy detector can be used as a reference standard. By controlling the working current of the ultraviolet lamp panel to gradually increase during energy detection, in each candidate energy detection structure, the ultraviolet energy detection module in the candidate energy detection structure performs energy detection to obtain a first voltage variation curve, the ultraviolet energy detector located external to the candidate energy detection structure performs energy detection to obtain a second voltage variation curve, and a range coverage is determined on the basis of the first voltage variation curve and the corresponding second voltage variation curve. The range coverage is an indicator reflecting the detection range of the ultraviolet energy detection module, and the range coverage is positively correlated with the detection range of the ultraviolet energy detection module. A first fitted model is constructed on the basis of the range coverages, the candidate diameters, and the candidate depths, and with an optimization objective of maximizing range coverage, an optimal target diameter and target depth are determined, and then a target ultraviolet energy detection structure is prepared on the basis of the target diameter and the target depth. This can achieve the optimal performance configuration of the ultraviolet energy detection module under actual working conditions and effectively increase its detection range. Specifically, the range coverage may be determined by a variety of implementations, and one implementation of determining the range coverage will be described in detail below.

First, the candidate diameters and candidate depths corresponding to the candidate cover plates are acquired, and then the candidate cover plates are replaced in turn in the ultraviolet lamp box. Then, each time a candidate cover is placed in the ultraviolet lamp box, a plurality of different working currents are sequentially set for the lamp panel driver to drive the ultraviolet lamp panel to emit ultraviolet lights corresponding to the working currents, the ultraviolet lights corresponding to the working currents are sequentially detected by the ultraviolet energy detection module to obtain first detection results corresponding to the working currents, and the ultraviolet lights corresponding to the working currents are sequentially detected by the ultraviolet energy detector to obtain second detection results corresponding to the working currents, wherein the first detection results and the second detection results both can be represented by voltages.

Next, a first voltage variation curve is constructed on the basis of the working currents and the first detection results corresponding to the working currents, and a second voltage variation curve is constructed on the basis of the working currents and the second detection results corresponding to the working currents.

Next, a minimum first detection result and a maximum first detection result are determined on the basis of the first voltage variation curve, and a first measurement range is determined on the basis of the difference between the minimum first detection result and the maximum first detection result. Next, a minimum second detection result and a maximum second detection result are determined on the basis of the second voltage variation curve, and a second measurement range is determined on the basis of the difference between the minimum second detection result and the maximum second detection result.

Next, a range coverage corresponding to the candidate cover plate is determined on the basis of the ratio of the first measurement range to the second measurement range.

Another implementation of determining the range coverage will be described in detail below.

First, the candidate diameters and candidate depths corresponding to the candidate cover plates are acquired, and then the candidate cover plates are replaced in turn in the ultraviolet lamp box. Then, each time a candidate cover is placed in the ultraviolet lamp box, a plurality of different working currents are sequentially set for the lamp panel driver to drive the ultraviolet lamp panel to emit ultraviolet lights corresponding to the working currents, the ultraviolet lights corresponding to the working currents are sequentially detected by the ultraviolet energy detection module to obtain first detection results corresponding to the working currents, and the ultraviolet lights corresponding to the working currents are sequentially detected by the ultraviolet energy detector to obtain second detection results corresponding to the working currents, wherein the first detection results and the second detection results both can be represented by voltages.

Next, a first voltage variation curve is constructed on the basis of the working currents and the first detection results corresponding to the working currents, and a second voltage variation curve is constructed on the basis of the working currents and the second detection results corresponding to the working currents.

Next, a minimum first detection result and a maximum first detection result are determined on the basis of the first voltage variation curve, and a minimum second detection result and a maximum second detection result are determined on the basis of the second voltage variation curve.

Next, a range coverage is determined on the basis of the difference between the minimum first detection result and the minimum second detection result, and the difference between the maximum first detection result and the maximum second detection result.

Exemplarily, a determination formula for another implementation of determining the range coverage is as follows: $K = 1 - \sqrt{{\left(\frac{{V}_{start 1} - {V}_{start 2}}{range 1}\right)}^{2} + {\left(\frac{{V}_{end 1} - {V}_{end 2}}{range 1}\right)}^{2}}$ **where** *K* **is** the range coverage, *V*_{*start*1} is the minimum first detection result, *V*_{*start*2} is the minimum second detection result, *V*_{*end*1} is the maximum first detection result, *V*_{*end*2} is the maximum second detection result, and *range*1is the second measurement range of the external ultraviolet energy detector.

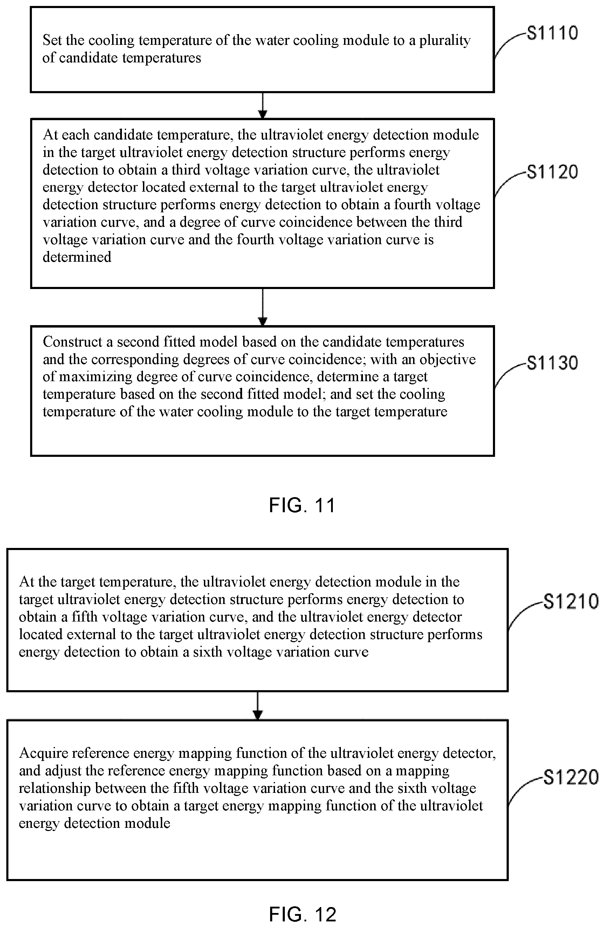

In addition, referring to FIG. 11, FIG. 11 is an optional schematic flowchart of a temperature control method provided in an embodiment of the present disclosure. In an embodiment, the base of the target ultraviolet energy detection structure is provided with the cooling structure for connecting a water cooling module. After the target ultraviolet energy detection structure is prepared on the basis of the target diameter and the target depth, the preparation method further includes but is not limited to the following steps.

At step S1110, the cooling temperature of the water cooling module is set to a plurality of candidate temperatures.

At step S1120, at each candidate temperature, the ultraviolet energy detection module in the target ultraviolet energy detection structure performs energy detection to obtain a third voltage variation curve, the ultraviolet energy detector located external to the target ultraviolet energy detection structure performs energy detection to obtain a fourth voltage variation curve, and a degree of curve coincidence between the third voltage variation curve and the fourth voltage variation curve is determined, wherein the working current of the ultraviolet lamp panel gradually increases during energy detection.

At step S1130, a second fitted model is constructed on the basis of the candidate temperatures and the corresponding degrees of curve coincidence; with an objective of maximizing degree of curve coincidence, a target temperature is determined on the basis of the second fitted model; and the cooling temperature of the water cooling module is set to the target temperature.

The working current of the ultraviolet lamp panel can be set by means of the lamp panel driver. The degree of curve coincidence between the third voltage variation curve and the fourth voltage variation curve can be obtained by the following steps: obtaining a degree of point coincidence on the basis of voltages on the third voltage variation curve and voltages on the fourth voltage variation curve under an identical working current, and finally calculating a weighted average of the degrees of point coincidence corresponding to the working currents.

The third voltage variation curve and the fourth voltage variation curve may both be constructed in a coordinate system where the horizontal axis represents working current and the vertical axis represents detection voltage.

Specifically, the second fitted model can be constructed using methods such as polynomial regression, interpolation and machine learning models, and the objective of maximizing degree of curve coincidence means that the optimization objective of the second fitted model is maximizing degree of curve coincidence. The optimization of the second fitted model can be achieved using methods such as numerical optimization, interpolation search or function inversion.

On this basis, since the ultraviolet energy detection module is fixed on the base, the temperature of the base is equivalent to the ambient temperature of the ultraviolet energy detection module, and the physical properties of sensitive materials inside the ultraviolet energy detection module will change at different temperatures, thereby affecting the voltage variation trend of the ultraviolet energy detection module. The base can be at different candidate temperatures by setting the cooling temperature of the water cooling module to multiple candidate temperatures. The working current of the ultraviolet lamp panel is controlled to gradually increase during energy detection. At each candidate temperature, the ultraviolet energy detection module in the target ultraviolet energy detection structure performs energy detection to obtain a third voltage variation curve, the ultraviolet energy detector located external to the target ultraviolet energy detection structure performs energy detection to obtain a fourth voltage variation curve, and a degree of curve coincidence between the third voltage variation curve and the fourth voltage variation curve is determined. The degree of curve coincidence can characterize the similarity between the voltage variation trends of the target ultraviolet energy detection structure and the ultraviolet energy detector. Further, since the ultraviolet energy detector is a high-precision detection instrument, it can be considered that the degree of curve coincidence is positively correlated with the accuracy of ultraviolet energy detection. By constructing a second fitted model on the basis of the candidate temperatures and the degrees of curve coincidence, and taking the maximization of degree of curve coincidence as the optimization objective, an optimal target temperature is determined, and then the cooling temperature of the water cooling module is set to the target temperature. This can further achieve the optimal performance configuration of the ultraviolet energy detection module under actual working conditions, and effectively improve the accuracy of ultraviolet light detection by the ultraviolet energy detection module.

In addition, referring to FIG. 12, FIG 12 is an optional schematic flowchart of a calibration method provided in an embodiment of the present disclosure. In an embodiment, after the cooling temperature of the water cooling module is set to the target temperature, the preparation method further includes but is not limited to the following steps.

At step S1210, at the target temperature, the ultraviolet energy detection module in the target ultraviolet energy detection structure performs energy detection to obtain a fifth voltage variation curve, and the ultraviolet energy detector located external to the target ultraviolet energy detection structure performs energy detection to obtain a sixth voltage variation curve.

At step S1220, a reference energy mapping function of the ultraviolet energy detector is acquired, and the reference energy mapping function is adjusted on the basis of a mapping relationship between the fifth voltage variation curve and the sixth voltage variation curve to obtain a target energy mapping function of the ultraviolet energy detection module.

The working current of the ultraviolet lamp panel gradually increases during energy detection.

The reference energy mapping function is used for indicating a relationship between a detection voltage of the ultraviolet energy detector and an ultraviolet energy value, and the target energy mapping function is used for indicating a relationship between a detection voltage of the ultraviolet energy detection module and an ultraviolet energy value.

It should be noted that by inputting the detection voltage of the ultraviolet energy detector into the reference energy mapping function, accurate ultraviolet energy can be obtained by mapping the detection voltage of the ultraviolet energy detector through the reference energy mapping function. Therefore, it is possible to determine the ultraviolet energy corresponding to the ultraviolet lamp panel at different working currents.

On this basis, since the ultraviolet energy detector is a high-precision detection instrument, the reference energy mapping function of the ultraviolet energy detector can be used as a reference standard. At the target temperature, the ultraviolet energy detection module in the target ultraviolet energy detection structure performs energy detection to obtain a fifth voltage variation curve, and the ultraviolet energy detector located external to the target ultraviolet energy detection structure performs energy detection to obtain a sixth voltage variation curve.

Then, the reference energy mapping function is adjusted on the basis of the mapping relationship between the fifth voltage variation curve and the sixth voltage variation curve to obtain a target energy mapping function of the ultraviolet energy detection module. The target energy mapping function can map the detection voltage of the ultraviolet energy detection module to accurate ultraviolet energy, thereby realizing the calibration of the ultraviolet energy detection module through the ultraviolet energy detector, and effectively improving the accuracy of ultraviolet light detection by the ultraviolet energy detection module.

Specifically, the fifth voltage variation curve and the sixth voltage variation curve can both be constructed in a coordinate system where the horizontal coordinate represents working current and the vertical coordinate represents detection voltage. Under each working current, the mapping relationship between the fifth voltage variation curve and the sixth voltage variation curve can be determined. For example, when the working current is 1 A, the corresponding detection voltage on the fifth voltage variation curve is 0.5 V, and the corresponding detection voltage on the sixth voltage variation curve is 0.6 V, then it can be determined that the mapping relationship under this working current is 0.5:0.6. Moreover, assuming that the detection voltage of the ultraviolet energy detector is 0.6 V, the detection voltage of the ultraviolet energy detector can be mapped by the reference energy mapping function to obtain the ultraviolet energy of 50 mW/cm², then it can be determined that when the detection voltage of the ultraviolet energy detection module is 0.5 V, the ultraviolet energy of the ultraviolet energy detection module is also 50 mW/cm². Therefore, the reference energy mapping function can be adjusted on the basis of the mapping relationship under each working current to obtain a target energy mapping function.

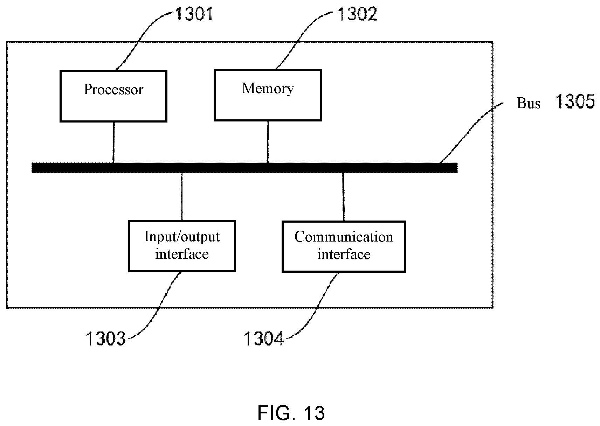

In addition, referring to FIG. 13, FIG. 13 illustrates a hardware structure of an electronic device according to another embodiment, the electronic device including a processor 1301, a memory 1302, an input/output interface 1303, a communication interface 1304, and a bus 1305.

The processor 1301 may be implemented by a general-purpose central processing unit (CPU), a microprocessor, an application specific integrated circuit (ASIC), or one or more integrated circuits, and is configured for executing relevant programs to implement the technical solutions provided in the embodiments of the present disclosure.

The memory 1302 may be implemented in the form of a read-only memory (ROM), a static storage device, a dynamic storage device, or a random access memory (RAM). The memory 1302 can store an operating system and other application programs. When the technical solutions provided in the embodiments of this description are implemented by software or firmware, the relevant program code is stored in the memory 1302 and is called by the processor 1301 to execute the method for preparing an ultraviolet energy detection structure in the embodiments of the present disclosure.

The input/output interface 1303 is configured to implement information input and output.

The communication interface 1304 is configured to enable communication and interaction between the current device and other devices. The communication can be realized through a wired method (such as USB, network cable, and the like) or a wireless method (such as mobile network, WIFI, Bluetooth, and the like).

The bus 1305 transmits information between various components of the device (e.g., the processor 1301, the memory 1302, the input/output interface 1303, and the communication interface 1304).

The processor 1301, the memory 1302, the input/output interface 1303 and the communication interface 1304 are interconnected via the bus 1305 to enable internal communication within the device.

An embodiment of the present disclosure further provides a storage medium, which is a computer-readable storage medium for computer-readable storage. The storage medium stores one or more programs that can be executed by one or more processors to implement the above method for preparing an ultraviolet energy detection structure.

As a non-transitory computer-readable storage medium, the memory can be configured for storing non-transitory software programs and non-transitory computer executable programs. In addition, the memory may include high-speed random access memory and may also include non-volatile memory, such as at least one disk storage device, flash memory device, or other non-volatile solid-state storage device. In some embodiments, the memory may optionally include memories located remotely from the processor, and these remote memories may be connected with the processor via a network. Examples of the network include, but are not limited to, the Internet, intranets, local area networks (LANs), mobile communication networks and combinations thereof. The embodiments described in the description of the present disclosure are intended to more clearly illustrate the technical solutions of the embodiments of the present disclosure and do not constitute a limitation on the technical solutions provided in the embodiments of the present disclosure. Those of ordinary skills in the art will appreciate that with the evolution of technology and the emergence of new application scenarios, the technical solutions provided in the embodiments of the present disclosure are also applicable to similar technical problems.

On this basis, those of ordinary skills in the art will appreciate that the technical solutions shown in FIG. 1 to FIG. 13 do not constitute limitations on the embodiments of the present disclosure, and more or fewer steps than shown in the figures may be included, or certain steps may be combined, or different steps may be included.

The device embodiments described above are merely illustrative, wherein the units described as separate components may or may not be physically separated, that is, may be located in one place, or may be distributed to multiple network units. Some or all of the modules may be selected according to actual needs to achieve the purpose of the solutions in the embodiments.

Those of ordinary skills in the art will appreciate that all or some of the steps in the methods disclosed above, and the functional modules/units in the systems and devices may be implemented as software, firmware, hardware, or a suitable combination thereof.

The terms "first", "second" "third", "fourth", and the like (if any) in the description of the present disclosure and the accompanying drawings are used for distinguishing between similar objects, and are not necessarily intended to describe a specific order or sequence. It should be appreciated that the data used in this way can be interchangeable where appropriate, such that the embodiments of the present disclosure described herein can be implemented in an order other than those illustrated or described herein. In addition, the terms "including" and "having" and any of their variations are intended to cover non-exclusive inclusions. For example, a process, method, system, product or device that includes a series of steps or units is not necessarily limited to those steps or units explicitly listed, but may include other steps or units that are not explicitly listed or inherent to such process, method, product or device.

It should be appreciated that, in the present disclosure, "at least one" refers to one or more, and "a plurality of" refers to two or more. "And/or" is used for describing the association relationship between related objects, indicating that there can be three relationships. For example, "A and/or B" may represent: the existence of A only, the existence of B only, or the coexistence of A and B, where A and B may be singular or plural. The character "/" generally indicates that the previous and next associated objects are in an "or" relationship. "At least one of the following" or similar expressions refers to any combination of the listed items, including a single item or any combination of multiple items. For example, at least one of a, b or c may represent: a, b, c, "a and b", "a and c", "b and c", or "a, b and c", where a, b and c can be single or plural.

In several embodiments provided in the present disclosure, it should be appreciated that the disclosed devices and methods can be implemented in other ways. For example, the device embodiments described above are merely illustrative. For example, the division of the above units is merely a logical function division. There may be other division methods in actual implementation. For example, multiple units or components may be combined or integrated into another system, or some features may be omitted or not implemented. Additionally, the couplings, direct couplings, or communication connections shown or discussed between elements may be indirect couplings or communication connections through some interface, device, or unit, which may be electrical, mechanical, or of another form.

The units described above as separate components may or may not be physically separated, and the components shown as units may or may not be physical units, that is, they may be located in one place or distributed on multiple network units. Some or all of the units may be selected according to actual needs to achieve the purpose of the solutions of the embodiments.

In addition, in various embodiments of the present disclosure, various functional units may be integrated into a single processing unit, various units may exist physically separately, or two or more units may be integrated into a single unit. The integrated unit may be implemented in the form of hardware or in the form of a software functional unit.

If the integrated unit is implemented in the form of a software functional unit and sold or used as an independent product, it may be stored in a computer-readable storage medium. On the basis of such understanding, the technical solution of the present disclosure, in essence, or the part of the technical solution that contributes to the prior art, or all or part of the technical solution, can be embodied in the form of a software product. The computer software product is stored in a storage medium and includes multiple instructions for enabling a computer device (which may be a personal computer, a server, or a network device, and the like) to execute all or some of the steps of the methods described in various embodiments of the present disclosure. The storage medium includes various media that can store programs, such as USB flash drives, mobile hard disks, read-only memory (ROM), random access memory (RAM), magnetic disks, or optical disks. Preferred embodiments of the embodiments of the present disclosure are described above with reference to the accompanying drawings, but the scope of rights of the embodiments of the present disclosure is not limited thereby. Any modifications, equivalent substitutions and improvements made by those of ordinary skills in the art without departing from the scope and essence of the embodiments of the present disclosure shall be within the scope of rights of the embodiments of the present disclosure.

## Claims

1. An ultraviolet energy detection structure, comprising a base (100), an ultraviolet energy detection module (400), and a cover plate (200), wherein:
the base (100) is provided with a cooling structure (110) for cooling the base (100);
the cover plate (200) is arranged on the base (100), a first accommodating cavity (210) and a second accommodating cavity (220) are defined between the cover plate (200) and the base (100), the first accommodating cavity (210) is configured for accommodating an ultraviolet lamp panel (300), the cover plate (200) is provided with a light outlet (230) in communication with the first accommodating cavity (210), the light outlet (230) is configured for receiving ultraviolet light emitted by the ultraviolet lamp panel (300), and the light outlet (230) is provided with a light inlet through-hole (231) in communication with the second accommodating cavity (220) in a side wall of the light outlet (230); and
the ultraviolet energy detection module (400) comprises a circuit board (410) and an ultraviolet sensor (420) connected to the circuit board (410), the circuit board (410) is fixed on the base (100), the ultraviolet sensor (420) is located in the second accommodating cavity (220), a sensing end of the ultraviolet sensor (420) faces the light inlet through-hole (231), and the ultraviolet sensor (420) is configured for detecting an ultraviolet energy value of the ultraviolet lamp panel (300).

2. The ultraviolet energy detection structure according to claim 1, wherein an axis of the light inlet through-hole (231) is perpendicular to a plane at which the side wall of the light outlet (230) is located, a center of the sensing end of the ultraviolet sensor (420) is on the same line as the axis of the light inlet through-hole (231), and the sensing end of the ultraviolet sensor (420) is perpendicular to the axis of the light inlet through-hole (231).

3. The ultraviolet energy detection structure according to claim 1, wherein the ultraviolet lamp panel (300) comprises a plurality of ultraviolet lamps (310), and a light entrance of the light inlet through-hole (231) is located within an irradiation range of each of the ultraviolet lamps (310).

4. The ultraviolet energy detection structure according to claim 1, wherein the base (100) is provided with a recess (140) in communication with the second accommodating cavity (220), and the circuit board (410) is fixedly connected to the recess (140).

5. The ultraviolet energy detection structure according to claim 4, wherein the base (100) is provided with a first wiring hole (120) and a second wiring hole (130), the first wiring hole (120) is in communication with the second accommodating cavity (220) at one end of the first wiring hole (120), another end of the first wiring hole (120) extends through the base (100), the second wiring hole (130) is in communication with the second accommodating cavity (220) at one end of the second wiring hole (130), and the second wiring hole (130) is in communication with the first accommodating cavity (210) at another end of the second wiring hole (130).

6. An ultraviolet lamp box, comprising a base (100), an ultraviolet energy detection module (400), a cover plate (200), an ultraviolet lamp panel (300), and a lamp panel driver, wherein:
the base (100) is provided with a cooling structure (110) for cooling the base (100);
the ultraviolet lamp panel (300) is arranged on the base (100);
the lamp panel driver is configured for driving the ultraviolet lamp panel (300);
the cover plate (200) is arranged on the base (100), a first accommodating cavity (210) and a second accommodating cavity (220) are defined between the cover plate (200) and the base (100), the first accommodating cavity (210) is configured for accommodating the ultraviolet lamp panel (300), the cover plate (200) is provided with a light outlet (230) in communication with the first accommodating cavity (210), the light outlet (230) is provided with a light inlet through-hole (231) in communication with the second accommodating cavity (220) in a side wall of the light outlet (230), and the light outlet (230) is configured for receiving ultraviolet light emitted by the ultraviolet lamp panel (300); and
the ultraviolet energy detection module (400) comprises a circuit board (410) and an ultraviolet sensor (420) connected to the circuit board (410), the circuit board (410) is fixed on the base (100), the ultraviolet sensor (420) is located in the second accommodating cavity (220), a sensing end of the ultraviolet sensor (420) faces the light inlet through-hole (231), and the ultraviolet sensor (420) is configured for detecting an ultraviolet energy value of the ultraviolet lamp panel (300).

7. The ultraviolet lamp box according to claim 6 , wherein the ultraviolet lamp panel (300) is provided in plural, the plurality of ultraviolet lamp panels (300) are arranged side by side on the base (100), quantities of the lamp panel driver, the light outlet (230), the light inlet through-hole (231), and the ultraviolet energy detection module (400) each correspond to a quantity of the ultraviolet lamp panels (300), each of the ultraviolet lamp panels (300) is connected to a corresponding lamp panel driver, each of the lamp panel drivers is configured for driving a corresponding ultraviolet lamp panel (300), ultraviolet light emitted by each of the ultraviolet lamp panels (300) is received by a corresponding light outlet (230), each of the light inlet through-holes (231) is provided in the side wall of a corresponding light outlet (230), the sensing end of each of the ultraviolet sensors (420) faces a corresponding light inlet through-hole (231), and each of the ultraviolet sensors (420) is configured for detecting the ultraviolet energy value of a corresponding ultraviolet lamp panel (300).

8. A method for preparing an ultraviolet energy detection structure, comprising:
preparing a plurality of candidate energy detection structures (S1010), wherein each of the candidate energy detection structures comprises an ultraviolet energy detection module and a cover plate, candidate diameters or candidate depths of light inlet through-holes of any two of the cover plates are different, and each of the candidate energy detection structures is provided with an ultraviolet lamp panel;
in each of the candidate energy detection structures, performing energy detection by the ultraviolet energy detection module in the respective candidate energy detection structure to obtain a first voltage variation curve, performing energy detection by an ultraviolet energy detector located external to the respective candidate energy detection structure to obtain a second voltage variation curve, and determining a range coverage based on the first voltage variation curve and the corresponding second voltage variation curve (S1020), wherein a working current of the ultraviolet lamp panel gradually increases during energy detection;
constructing a first fitted model based on the range coverages, the corresponding candidate diameters, and the corresponding candidate depths, and with an objective of maximizing range coverage, determining a target diameter and a target depth based on the first fitted model (S1030); and
preparing a target ultraviolet energy detection structure based on the target diameter and the target depth (S1040), wherein the target ultraviolet energy detection structure is the ultraviolet energy detection structure according to any one of claims 1 to 5.

9. The method for preparing an ultraviolet energy detection structure according to claim 8, wherein the base of the target ultraviolet energy detection structure is provided with the cooling structure for connecting a water cooling module, and after the preparing the target ultraviolet energy detection structure based on the target diameter and the target depth, the method further comprises:
setting a cooling temperature of the water cooling module to a plurality of candidate temperatures, respectively (S1110);
at each of the candidate temperatures, performing energy detection by the ultraviolet energy detection module in the target ultraviolet energy detection structure to obtain a third voltage variation curve, performing energy detection by the ultraviolet energy detector located external to the target ultraviolet energy detection structure to obtain a fourth voltage variation curve, and determining a degree of curve coincidence between the third voltage variation curve and the fourth voltage variation curve (S1120), wherein the working current of the ultraviolet lamp panel gradually increases during energy detection; and
constructing a second fitted model based on the candidate temperatures and the corresponding degrees of curve coincidence; with an objective of maximizing degree of curve coincidence, determining a target temperature based on the second fitted model; and setting the cooling temperature of the water cooling module to the target temperature (S1130).

10. The method for preparing an ultraviolet energy detection structure according to claim 9, wherein after the setting the cooling temperature of the water cooling module to the target temperature, the method further comprises:
at the target temperature, performing energy detection by the ultraviolet energy detection module in the target ultraviolet energy detection structure to obtain a fifth voltage variation curve, and performing energy detection by the ultraviolet energy detector located external to the target ultraviolet energy detection structure to obtain a sixth voltage variation curve (S1210), wherein the working current of the ultraviolet lamp panel gradually increases during energy detection; and
acquiring a reference energy mapping function of the ultraviolet energy detector, and adjusting the reference energy mapping function based on a mapping relationship between the fifth voltage variation curve and the sixth voltage variation curve to obtain a target energy mapping function of the ultraviolet energy detection module (S1220), wherein the reference energy mapping function is configured for indicating a relationship between a detection voltage of the ultraviolet energy detector and an ultraviolet energy value, and the target energy mapping function is configured for indicating a relationship between a detection voltage of the ultraviolet energy detection module and an ultraviolet energy value.
